Europäisches Patentamt

European Patent Office

Office européen des brevets

(11) Veröffentlichungsnummer: **0 298 236**
**A2**

# (12) EUROPÄISCHE PATENTANMELDUNG

(21) Anmeldenummer: 88108231.7

(22) Anmeldetag: 24.05.88

(51) Int. Cl.⁴: **C08L 81/02 , H01B 3/30 ,**
**//(C08L81/02,67:00)**

(30) Priorität: 05.06.87 DE 3718891

(43) Veröffentlichungstag der Anmeldung:
11.01.89 Patentblatt 89/02

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Der weitere Erfinder hat auf seine**
**Nennung verzichtet**

(54) Mischungen aus Polyarylensulfiden und Polyestern und deren Verwendung.

(57) Der Erfindung betrifft Mischungen aus Polyarylensulfiden und Polyestern und deren Verwendung als thermoplastische Einbettmassen für elektronische Bauteile.

EP 0 298 236 A2

EP 0 298 236 A2

## Mischungen aus Polyarylensulfiden und Polyestern und deren Verwendung

Die Erfindung betrifft Mischungen aus Polyarylensulfiden und Polyestern und deren Verwendung als thermoplastische Einbettmassen für elektronische Bauteile.

Polyarylensulfide (PPS) und deren Herstellung sind bekannt, z.B. EP-OS 171 021 und dort zitierte Literatur.

Weiterhin ist z.B. aus der DE-OS 32 05 992 bekannt, nachbehandelte Polyphenylensulfide mit Polyestern abzumischen. Außerdem ist z.B. aus der JP-OS 42 460, JA 57 168 945, JA 57 092 044, JA 57 137 346 und JA 58 025 353 bekannt, Mischungen von 99 - 1 % PPS mit 1 - 99 % Polyester mit Glasfasern abzumischen und durch Spritzguß zu verarbeiten.

Die Verwendung derartiger Mischungen als Einbettmassen für elektronische Bauteile wurde bis jetzt noch nicht beschrieben. Thermoplastische Einbettmassen für elektronische Bauteile, insbesondere Einbettmassen für inte grierte Schaltungen (Microchips) sollten besonders niedrige Viskositäten der Schmelzen besitzen, damit die nur 25 µm starken Kontaktdrähtchen, die die Verbindungen zwischen den Anschlußstellen der Halbleiterkristalle und den Kontaktstiften des Bauteils herstellen, beim Umspritzen nicht infolge der zu hohen Scherbeanspruchung durch eine zu viskose Schmelze verbogen werden. Derartige Verbindungen könnten zu unerwünschten Kontakten zwischen benachbarten Kontaktdrähtchen führen, was den Ausfall des Bauteils zu Folge haben könnte.

Die Verbiegung der Kontaktdrähtchen unterbleibt, wenn die Viskosität der Schmelzen der thermoplastischen Einmassen, gemessen in einem Hochdruckkapillarviskosimeter bei der jeweiligen Verarbeitungstemperatur unter einer Schergeschwindigkeit von 1000 sec$^{-1}$, unterhalb von 50 Pa.s liegt.

Mischungen aus Polyphenylensulfid und Füllstoffen wie z.B. Quarzpulver sind als thermoplastische Einbettmassen für elektronische Bauteile bekannt (z.B. EP-OS 103 300). Sie besitzen jedoch in der Regel Schmelzviskositäten von mehr als 50 Pa.s, sodaß ihre Eignung als Einbettmassen für integrierte Schaltungen sehr eingeschränkt ist.

Aufgabe der vorliegenden Erfindung war daher die Bereitstellung von Einbettmassen, deren Schmelzviskositäten unterhalb von 50 Pa.s liegen.

Gegenstand der Erfindung sind daher thermoplastische Massen aus

a) 50 - 20 Gew.-% einer Mischung aus 60 - 99 Gew.-%, vorzugsweise 60 - 95 Gew.-% Polyarylensulfid, 1 - 40 Gew.-%, vorzugsweise 5 - 40 Gew.-% Polyester und

b) bezogen auf das Gewicht der Mischung a) 50 - 80 Gew.-% Füllstoffe.

Ein weiterer Vorteil der erfindungsgemäßen Mischungen ist, daß sie bei niedrigeren Temperaturen als Mischungen aus Polyphenylensulfid und Füllstoffen verarbeitet werden können. Dies bedeutet für die elektronischen Bauteile eine wichtige Schonung.

Als Polyarylensulfide können bekannte (z.B. US-PS 3 354 129) lineare oder verzweigte Polyarylen-(phenylen)sulfide verwendet werden, vorzugsweise die in der EP-OS 171 021 neu beschriebenen.

Das verwendete Polyarylensulfid, vorzugsweise Polyphenylensulfid, hat eine Schmelzviskosität von 10 bis 200, vorzugsweise 20 bis 60 Pa.s (gemessen bei 306° C und einer Scherbeanspruchung von 100 sec$^{-1}$).

Als Polyester können bekannte, handelsübliche, aromatisch-aliphatische Polyester, z.B. Polyethylenterephthalat, Polybutylenterephthalat usw. verwendet werden.

Die Polyester haben ein mittleres Molgewicht $M_w$ von 10 000 bis 100 000 (gemessen über Gelchromatographie nach bekannten Methoden).

Als Füllstoffe können übliche mineralische Füllstoffe, z.B. Quarz (-Pulver, -Mehl), Talkum, Kaolin, Glimmer, Quarzgut, Kalziumcarbonat, Glasfasern, Glaskugeln, Wallastonitfasern sowie Kombinationen aus mehreren Füllstoffen, z.B. Glasfasern und Quarzmehl, verwendet werden.

Weiterhin können die erfindungsgemäßen Mischungen Pigmente und übliche Verarbeitungshilfsmittel enthalten, z.B. Ruß, TiO$_2$, ZnS, Eisenoxide, übliche Formtrennmittel usw.

Die erfindungsgemäßen, thermoplastisch verarbeitbaren Mischungen können auf übliche Weise in üblichen Extrudern bei Temperaturen von 300 bis 360° C hergestellt werden.

Ein weiterer Gegenstand der Erfindung ist die Verwendung der erfindungsgemäßen Formmassen zur Umhüllung von elektronischen Bauteilen wie Kondensatoren, Transistoren, integrierten Schaltungen usw.

Vorzugsweise werden die erfindungsgemäßen Formmassen als Granulat oder Pulver eingesetzt.

Bei der Umhüllung der Bauteile mit den erfindungsgemäßen Massen können übliche Methoden angewendet werden, z.B. Spritzgießen.

2

Der Vorteil der erfindungsgemäßen Massen gegenüber entsprechenden bekannten Massen ist in ihrer niedrigeren Schmelzviskosität (gemessen im Hochdruckkapillarviskosimeter bei einer Schergeschwindigkeit von 1000 sec$^{-1}$) und der erniedrigten Verarbeitungstemperatur zu erkennen.

Beispiele

In einem Doppelwellenextruder werden die in der Tabelle beschriebenen Gemische aus Polyphenylensulfid, Polyester und Füllstoffen bei 320°C compoundiert und als Rundstränge abgezogen und granuliert. Die Schmelzviskositäten dieser Mischungen werden anschließend in einem Hochdruckkapillarviskosimeter bei 340°C und einer Schergeschwindigkeit von 1000 sec$^{-1}$ bestimmt.

| Beispiel Nr. | 1 | 2 | 3 | 4 | 5 | 6 | |
|---|---|---|---|---|---|---|---|
| Polyphenylensulfid (Schmelzviskosität: 22 Pa.s bei $306^0$ und 100 $sec^{-1}$) | 40 | 36 | 34 | 28 | 50 | 40 | Gew.-% |
| Polyethylenterephthalat (®Tenite 7741 der Fa. Eastman | – | 4 | 6 | 12 | – | 10 | Gew.-% |
| Quarzmehl (®Silbond 600 EST der Fa. Quarzwerke | 60 | 60 | 60 | 60 | 50 | 50 | Gew.-% |
| Schmelzviskosität der Compounds bei $340^0$ und 1000 $sec^{-1}$ | 103 | 72 | 61 | 38 | 46 | 28 | Pa.s |

EP 0 298 236 A2

**Ansprüche**

1. Thermoplastische Massen aus
   a) 50 - 20 Gew.-% einer Mischung aus 60 - 99 Gew.-% Polyarylensulfid, 1 - 40 Gew.-% Polyester und
   b) bezogen auf das Gewicht der Mischung a) 50 - 80 Gew.-% Füllstoffe.

2. Verwendung von thermoplastischen Massen nach Anspruch 1 zur Umhüllung von elektronischen Bauteilen.